# EUROPÄISCHE PATENTANMELDUNG

(11) **EP 4 129 739 A1**
(43) Veröffentlichungstag der Anmeldung: **08.02.2023**
(21) Anmeldenummer: 22187454.8
(22) Anmeldetag: 28.07.2022
(51) Int. Cl.: B60K 37/06

(54) **RUNDINSTRUMENT FÜR EIN FAHRZEUG**

(30) Priorität: 30.07.2021 DE 102021119929
(71) Anmelder: Fritz, Dominic, 58313 Herdecke (DE)
(72) Erfinder: Fritz, Dominic, 58313 Herdecke (DE)
(74) Vertreter: Gottschald Patentanwälte Partnerschaft mbB

(57) **Zusammenfassung**

Die Erfindung betrifft ein Rundinstrument Rundinstrument für ein Fahrzeug (1) mit einer Fahrzeugschnittstelle (3) zur Übertragung von Signalen (4) zwischen dem Fahrzeug (1) und dem Rundinstrument (2), mit einer elektrischen Steuerung (5) zur Verarbeitung mindestens eines über die Fahrzeugschnittstelle (3) vom Fahrzeug (1) zum Rundinstrument (2) übertragenen Signals (4) und zum Generieren mindestens einer Fahrzeuginformation (6) aus dem Signal (4), mit einer Kommunikationsschnittstelle (7) zur Kommunikation des Rundinstruments (2) mit einem Mobilgerät (8), insbesondere einem Smartphone, und mit einem frontseitigen digitalen Display (9) zur Anzeige der mindestens einen Fahrzeuginformation (6) und/oder einer über die Kommunikationsschnittstelle (7) vom Mobilgerät (8) empfangenen Mobilinformation (10).

## Beschreibung

Die Erfindung betrifft ein Rundinstrument für ein Fahrzeug gemäß Anspruch 1, eine Rundinstrumentenanordnung gemäß Anspruch 13 sowie ein Fahrzeug gemäß Anspruch 15.

Insbesondere Oldtimerfahrzeuge weisen in aller Regel Rundinstrumente zur Anzeige von Fahrzeuginformationen in ihrem Cockpit auf. Diese zeigen zumeist Fahrgeschwindigkeit, Motordrehzahl und/oder den Füllstand des Kraftstofftankes an.

Bei modernen Fahrzeugen sind diese Rundinstrumente digitalen Anzeigen in der Armatur gewichen. Diese erlauben es dem Fahrer deutlich mehr Informationen anzuzeigen. In modernen Fahrzeugen wird in diesen digitalen Anzeigen nicht nur die Geschwindigkeit und/oder die Motordrehzahl angezeigt, sondern der Fahrer wird auch mit zusätzlichen Informationen wie Navigationsinformationen eines Navigationssystems, Anrufinformationen über eingehende oder ausgehende Anrufe, Audioinformationen gespielter Radiosender und/oder gerade gespielter Musiktitel oder dergleichen versorgt. An diesen Komfort haben sich die Fahrer mehr und mehr gewöhnt. Insofern verlangen sie auch beim Fahren ihrer Oldtimerfahrzeuge nach zusätzlichen Informationen im Cockpit.

Gleichzeitig ist Oldtimer-Fahrern ein originalgetreuer Zustand der Oldtimerfahrzeuge besonders wichtig. Da Oldtimerfahrzeuge in der Regel über keine oder nur kleine Radioschächte verfügen, ist die Nachrüstung eines modernen Infotainmentsystems im Radioschacht in der Regel keine adäquate Lösung. Zudem sind bei Oldtimern die Radioschächte in der Regel an unübersichtlichen Stellen und zum Teil auch unter dem Armaturenbrett angeordnet, sodass das Ablesen eines Displays eines im Radioschacht verbauten Infotainmentsystems bei diesen Fahrzeugen während der Fahrt zumeist ausscheidet.

Der Erfindung liegt somit das Problem zugrunde, auch Fahrern älterer Fahrzeuge ohne größere Umbaumaßnahmen am Fahrzeug weitere Informationen im Cockpit bereitzustellen.

Das obige Problem wird durch ein Rundinstrument mit den Merkmalen von Anspruch 1 gelöst.

Wesentlich ist die grundsätzliche Überlegung, ein bei Oldtimerfahrzeugen zumeist vorhandenes analoges Rundinstrument durch ein Instrument mit digitalem Display zu ersetzen und auf diesem die Fahrzeuginformationen und/oder von einem Mobilgerät übertragene Mobilinformationen anzuzeigen.

Im Einzelnen wird vorgeschlagen, ein Rundinstrument für ein Fahrzeug mit einer Fahrzeugschnittstelle zur Übertragung von Signalen zwischen dem Fahrzeug (als solchem) und dem Rundinstrument vorzusehen.

Dieses weist eine elektrische Steuerung zur Verarbeitung mindestens eines über die Fahrzeugschnittstelle vom Fahrzeug zum Rundinstrument übertragenen Signals und zum Generieren mindestens einer Fahrzeuginformation aus dem Signal auf. Ferner ist eine Kommunikationsschnittstelle zur Kommunikation des Rundinstruments mit einem Mobilgerät, insbesondere einem Smartphone, sowie ein frontseitiges, digitales Display zur Anzeige der mindestens einen Fahrzeuginformation und/oder einer über die Kommunikationsschnittstelle vom Mobilgerät empfangenen Mobilinformation vorgesehen. Hierdurch kann dem Fahrer des Fahrzeugs eine größere Anzahl an Informationen im Cockpit des Fahrzeugs bereitgestellt werden. Insbesondere können alternativ oder zusätzlich zu Fahrzeuginformationen, wie beispielsweise der Motordrehzahl und/oder der Fahrgeschwindigkeit, über die Kommunikationsschnittstelle übertragene Mobilinformationen angezeigt werden. Dies können Navigationsinformationen zur Fahrstrecke und/oder Audioinformationen abgespielter Audiodaten und/oder Anrufinformationen zu auf dem Mobilgerät eingehenden oder ausgehenden Anrufen und/oder Wetterinformationen sein.

Dabei kann auf Wunsch das "Look & Feel" des ursprünglichen originalen Rundinstruments durch eine entsprechende digitale Anzeige beibehalten werden, sodass nach wie vor im Cockpit die klassische Anmutung des Oldtimerfahrzeugs erhalten bleibt. Zudem ist der Austausch eines Rundinstruments bei vielen Oldtimerfahrzeugen ganz besonders einfach zu realisieren, ohne dass dieses beschädigt wird. Zumeist können die Rundinstrumente einfach nach vorne aus der Armatur entnommen werden und die Fahrzeugschnittstelle vom Fahrzeug getrennt werden. Ein vorschlagsgemäßes Rundinstrument kann dann über seine Fahrzeugschnittstelle mit dem Fahrzeug verbunden und in die Armatur eingesetzt werden. Es wird ein ganz besonders einfaches Umrüsten ermöglicht, welches auch durch einen Laien durchführbar ist.

Eine einfache Konfiguration des Rundinstruments bzw. eine Konfiguration der Anzeige auf dem Display des Rundinstruments selbst kann mittels eines Mobilgeräts über die Kommunikationsschnittstelle erreicht werden (Anspruch 2).

Gemäß der besonders bevorzugten Ausgestaltung gemäß Anspruch 3 ist die Kommunikationsschnittstelle eine drahtlose Schnittstelle, vorzugsweise eine Bluetooth-Schnittstelle. Eine solche Schnittstelle ermöglicht ein besonders einfaches Anbinden des Mobilgeräts an das Rundinstrument.

Die Ausgestaltungen gemäß den Ansprüchen 4 und 5 betreffen eine bevorzugte Konfiguration der Fahrzeugschnittstelle sowie die Aufbereitung eines über die Fahrzeugschnittstelle übertragenen analogen Signals mittels eines Analog-Digital-Wandlers.

In den Ansprüchen 6 bis 8 sind bevorzugte Signale beschrieben, welche über die Fahrzeugschnittstelle zu dem Rundinstrument übertragen werden. Diese werden vorzugsweise ausgewertet und/oder aufbereitet und daraus Fahrzeuginformationen generiert, welche auf dem Display des Rundinstruments angezeigt werden.

Der Anspruch 9 beschreibt die bevorzugte Ausgestaltung des Displays als Runddisplay, welches sich über einen wesentlichen Anteil der Stirnfläche des Rundinstruments erstreckt und so eine möglichst große Anzeigefläche für Informationen bereitstellt.

Interessant sind ferner die bevorzugten Ausgestaltungen gemäß den Ansprüchen 10 und 11, welche die körperliche Ausgestaltung des Rundinstruments betreffen und eine möglichst einfache Montage in der Armatur des Fahrzeugs ermöglichen.

Im Anspruch 12 sind Mobilinformationen benannt, welche bevorzugt auf dem Display des Rundinstruments digital anzeigbar sind.

Nach einer weiteren Lehre, der eigenständige Bedeutung zukommt, wird das eingangs beschriebene Problem ferner durch eine Rundinstrumentenanordnung mit den Merkmalen des Anspruchs 13 gelöst.

Die vorschlagsgemäße Rundinstrumentenanordnung weist ein erstes Rundinstrument und ein Mobilgerät zur Kommunikation mit dem Rundinstruments über die Kommunikationsschnittstelle und/oder ein weiteres Rundinstrument auf. Zur Ausgestaltung des ersten Rundinstruments wird auf die vorstehenden Ausführungen verwiesen. Auch das zweite Rundinstrument ist bevorzugt - wie zuvor in Zusammenhang mit dem ersten Rundinstrument beschrieben - ausgebildet. Durch das Vorsehen zweier Rundinstrumente bzw. des Mobilgeräts mit digitalen Displays kann die Anzeigefläche für Informationen weiter gesteigert werden. Zudem ergeben sich die gleichen Vorteile, wie vorstehend im Zusammenhang mit dem Rundinstrument beschrieben.

Eine bevorzugte Ausgestaltung der datentechnischen Kopplung der beiden Rundinstrumente ist in Anspruch 14 beschrieben.

Nach einer weiteren Lehre, der eigenständige Bedeutung zukommt, wird das eingangs beschriebene Problem durch ein Fahrzeug mit den Merkmalen von Anspruch 15 gelöst.

Das vorschlagsgemäße Fahrzeug weist mindestens ein Rundinstrument der vorstehend beschriebenen Art und/oder eine Rundinstrumentenanordnung der zuvor beschriebenen Art auf. Es ergeben sich die gleichen Vorteile, wie vorstehend im Zusammenhang mit dem Rundinstrument bzw. der Rundinstrumentenanordnung beschrieben.

Im Folgenden wird die Erfindung anhand einer lediglich ein Ausführungsbeispiel darstellenden Zeichnung näher erläutert. In der Zeichnung zeigt
- Fig. 1: eine Frontalansicht einer vorschlagsgemäße Rundinstrumentenanordnung mit einem vorschlagsgemäßen Rundinstrument sowie ein Mobilgerät,
- Fig. 2: eine Frontalansicht eines weiteren Ausführungsbeispiels einer vorschlagsgemäßen Rundinstrumentenanordnung mit einem vorschlagsgemäßen Rundinstrument,
- Fig. 3: eine schematische Seitenansicht auf ein vorschlagsgemäßes Rundinstrument und dessen Befestigung in der Armatur und
- Fig. 4: eine schematische Ansicht eines vorschlagsgemäßen Fahrzeugs mit einer vorschlagsgemäßen Rundinstrumentenanordnung gemäß Fig. 1.

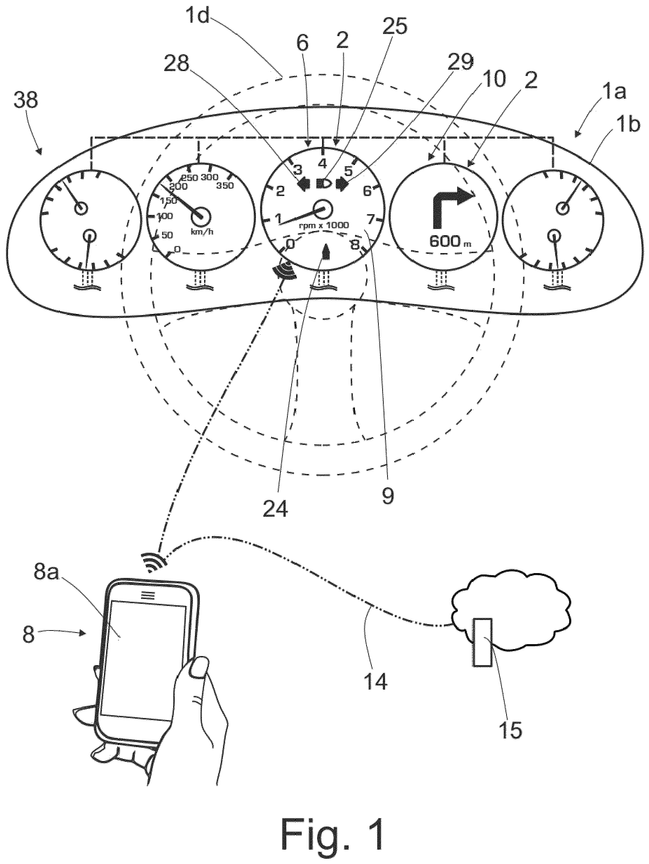

In der Fig. 1 sind für ein vorschlagsgemäßes Fahrzeug 1 mehrere Rundinstrumente 2 gezeigt, von denen mindestens eines vorschlagsgemäß ausgebildet ist. Es ist hier im Cockpit 1a des Fahrzeugs 1 in einer Armatur 1b angeordnet.

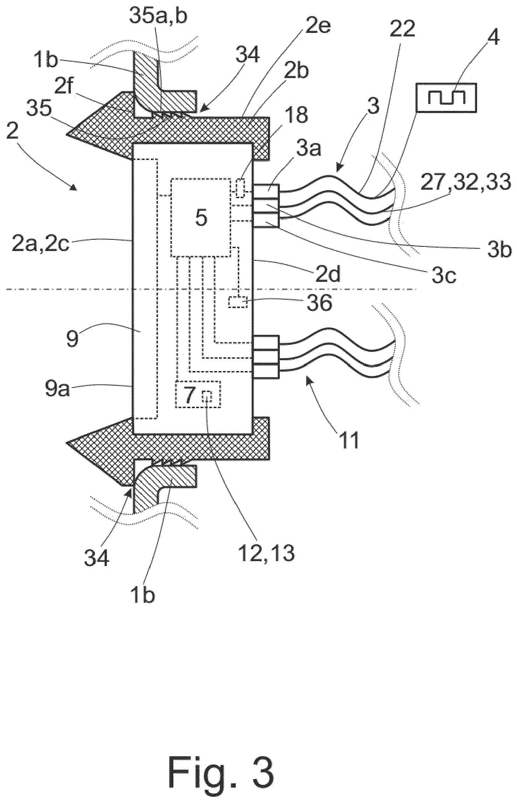

Das vorschlagsgemäße Rundinstrument 2 ist schematisch in der Fig. 3 gezeigt. Es weist eine Fahrzeugschnittstelle 3 zur Übertragung von Signalen 4 zwischen dem Fahrzeug 1 (als solchen) und dem Rundinstrument 2 auf. Ferner weist das Rundinstrument 2 eine Steuerung 5 zur Verarbeitung mindestens eines über die Fahrzeugschnittstelle 3 übertragenen Signals 4 und zum Generieren mindestens einer Fahrzeuginformation 6 aus dem Signal 4 auf. Hier und vorzugsweise werden mehrere verschiedene Signale 4 über die Fahrzeugschnittstelle 3 zwischen dem Fahrzeug 1 und dem Rundinstrument 2 übertragen. Aus den verschiedenen übertragenen Signalen 4 werden hier unterschiedliche Fahrzeuginformationen 6 generiert. Dies erfolgt hier durch ein Auswerten und/oder Auslesen der Fahrzeuginformationen 6 aus den jeweils übertragenen Signalen 4. Gegebenenfalls können die Signale 4 vor dem Auswerten und/oder Auslesen der Fahrzeuginformation 6 auch aufbereitet werden.

Auswerten meint ein Verarbeiten der Signale zur Extraktion der Fahrzeuginformation. Ausgelesen werden Signale die die Fahrzeuginformation bereits unmittelbar beinhalten.

Ferner weist das Rundinstrument 2 eine Kommunikationsschnittstelle 7 zur Kommunikation des Rundinstruments 2 mit einem Mobilgerät 8 auf. Das Mobilgerät 8 ist im Ausführungsbeispiel ein Smartphone.

Das Rundinstrument 2 weist hier zudem ein frontseitiges digitales Display 9 zur Anzeige mindestens einer Fahrzeuginformation 6 und/oder einer über die Kommunikationsschnittstelle 7 vom Mobilgerät 8 empfangene Mobilinformation 10 auf. Auf dem digitalen Display 9 können dem Fahrer während der Fahrt somit verschiedene Informationen besonders einfach im Cockpit 1a bereitgestellt werden.

Es können zum einen Fahrzeuginformationen 6 angezeigt werden, welche üblicherweise auf Rundinstrumenten 2 von Fahrzeugen 1 angezeigt werden, wie beispielsweise Motordrehzahl und/oder Fahrgeschwindigkeit. Zusätzlich oder alternativ können jedoch auch Mobilinformationen 10 von einem Mobilgerät 8 angezeigt werden. Diese werden hier über die Kommunikationsschnittstelle 7 übertragen. Dies können beispielsweise Navigationsinformationen von dem Mobilgerät und/oder Audioinformationen von mittels des Mobilgeräts abgespielter Audiodaten und/oder Anrufinformationen zu einem auf dem Mobilgerät eingehenden oder ausgehenden Anruf sein.

Zudem verfügt das Rundinstrument 2 hier über eine Versorgungsschnittstelle 11 zur Versorgung mit elektrischer Energie. Diese wird vorzugsweise vom Bordnetz 1c des Fahrzeugs 1 bereitgestellt.

Rundinstrumente 2 in Armaturen 1b von Fahrzeugen 2 sind zumeist in Fahrtrichtung R vor dem Lenkrad 1d derart angeordnet, dass der Fahrer durch das Lenkrad 1c oder um dieses herumgreifen muss, um Einstellungen am Rundinstrument 2 vorzunehmen. Eine solche Bedienung ist zumindest während der Fahrt zumeist nicht gewünscht. Daher ist hier und vorzugsweise das Rundinstrument 2, insbesondere die Anzeige auf dem Display (9) des Rundinstruments 2 und/oder die Steuerung 5 des Rundinstruments 2, mittels des Mobilgeräts 8 über die Kommunikationsschnittstelle 7 konfigurierbar. Das Mobilgerät 8 kann in einer Halterung außerhalb des Lenkradbereichs befestigt sein und ist insofern frei zugänglich. Diese Konfigurierbarkeit betrifft vorzugsweise sowohl die anzuzeigenden Fahrzeuginformationen 6 wie auch die anzuzeigende Mobilinformation 10. Im Ausführungsbeispiel können verschiedene Konfigurationen für das Rundinstrument 2 über das Mobilgerät 8 von einem entfernt stehenden Server 15 abgerufen oder auf diesem gespeichert werden.

Im Ausführungsbeispiel ist die Kommunikationsschnittstelle 7 eine drahtlose Schnittstelle. Hier und vorzugsweise weist das Rundinstrument 2 einen Bluetooth-Chip 12 auf und die Kommunikationsschnittstelle 7 ist eine Bluetooth-Schnittstelle 13. Hier handelt es sich um Bluetooth gemäß der Spezifikation 5.2 gemäß Bluetooth Special Interest Group (SIG). Diese ermöglicht eine besonders einfache und sichere Kommunikation zwischen dem Rundinstrument 2 und dem Mobilgerät 8.

Ferner kann vorgesehen sein, dass Fahrzeuginformationen 6 von dem Rundinstrument 2 über die Kommunikationsschnittstelle 7 auf das Mobilgerät 8 übertragen werden. Diese können dann auf dem Mobilgerät 8 gespeichert und/oder auf dem Display 8a des Mobilgeräts 8 angezeigt werden. Auf diese Weise lässt sich auch die Anzeigefläche für Informationen von dem Rundinstrument 2 auf das Display 8a des Mobilgeräts 8 erweitern. Auch können vom Mobilgerät 8 Mobilinformationen 10 auf dem Display 9 des Rundinstruments 2 angezeigt werden. Diese Informationen können vom Mobilgerät 8 zuvor beispielsweise über das Mobilfunknetz 14 von entfernt stehenden Servern 15 geladen werden.

Die Fahrzeuginformation 6 können auf unterschiedliche Art und Weise vom Fahrzeug 1 auf das Rundinstrument 2 übertragen werden. Dies erfolgt hier über die Fahrzeugschnittstelle 3. Diese ist im Ausführungsbeispiel und vorzugsweise kabelgebunden. Alternativ kann die Übertragung jedoch auch drahtlos erfolgen.

Im Ausführungsbeispiel weist die Fahrzeugschnittstellen 3 eine analoge Teilschnittstelle 3a zum Übertragen eines analogen Signals 4 vom Fahrzeug 1 zum Rundinstrument 2 auf. Zusätzlich oder alternativ kann eine digitale Teilschnittstelle 3b zur Übertragung eines digitalen Signals 4 vom Fahrzeug 1 zum Rundinstrument 2 vorgesehen sein. Darüber hinaus kann eine weitere Teilschnittstelle 3c zum Anschluss des Rundinstruments an ein Bussystem 1e des Fahrzeugs 1 vorgesehen sein. Über ein Bussystem 1d können Fahrzeuginformationen 6 verschiedener Steuergeräte 16 und/oder Aggregate 17 des Fahrzeugs 1 über ein und dasselbe Kabel bzw. ein und denselben Kabelstrang zum Rundinstrument 2 übertragen werden. Bei einem solchen Bussystem 1e kann es sich beispielsweise um ein(en) CanBus und/oder LinBus und/oder Automotive Ethernet handeln.

Hier und vorzugsweise weist das Rundinstrument 2 einen Analog-Digital-Wandler 18 auf. Dieser wandelt ein über die Fahrzeugschnittstelle 3 übertragenes analoges Signal 4 in ein digitales Signal 4. Er bereitet das Signal 4 für die Steuerung 5 auf. Das digitale Signal 4 wird dann von der Steuerung 5 verarbeitet. Sie wertet und/oder liest das (hier aufbereitete) Signal 4 aus und generiert aus dem Signal 4 eine Fahrzeuginformation 6, welche auf dem Display 9 des Rundinstruments 2 angezeigt wird.

Beispielsweise kann das Signal 4 ein analoges Signal 4 von einem Zündverteiler 19 oder einer Zündspule 20 und/oder ein digitales Signal 4, insbesondere Rechtecksignal, von einem Motorsteuergerät 21 sein. Aus einem vom Fahrzeug 1 zum Rundinstrument 2 übertragenen Signal 4 kann die Steuerung 5 die Motordrehzahl als Fahrzeuginformation generieren und diese auf dem Display 9 anzeigen. Das Signal 4 wird hier und vorzugsweise direkt über ein Kabel 22 übertragen, ohne dass weitere Fahrzeuginformationen 10 tragende Signale 4 über dasselbe Kabel 22 geleitet werden. Es handelt sich hier also nicht um ein Kabel eines Bussystems. Es kann direkt vom Motor 23, insbesondere vom Motorsteuergerät 21 und/oder vom Zündverteiler 19 und/oder von der Zündspule 20, über ein Kabel 22 zur Fahrzeugschnittstelle 3 des Rundinstruments 2 übertragen werden. Dieses Kabel 22 ist hier und vorzugsweise an einer Teilschnittstelle 3a, 3b der Fahrzeugschnittstelle 3 für den Motor 23 angeschlossen. Das Signal 4 wird dann vom Rundinstrument 2 verarbeitet und eine Fahrzeuginformation 6 auf dem Display 9 angezeigt. Im Ausführungsbeispiel und vorzugsweise wird die Motordrehzahl auf dem Display 9 als digitale Nadelanzeige, also eine virtuelle Nadel, angezeigt. Zusätzlich oder alternativ kann die Motordrehzahl auch durch eine körperliche Nadel auf dem digitalen Display 9 angezeigt werden. Im Ausführungsbeispiel sind keine weiteren Fahrzeuginformationen 10 tragende Signale 4 über das Kabel 22 vom Motor zur Teilschnittstelle 3a, 3b für den Motor übertragbar, welche auf dem Display 9 anzeigbar sind. Es handelt sich also nicht um ein Kabel eines Bussystems.

Ferner kann die Steuerung 5 die Motordrehzahl auf der Basis des Signals 4 auswerten und auf dem Display 9 basierend auf der Motordrehzahl eine Schaltempfehlung 24 anzeigen. Dies kann beispielsweise durch einen Farbwechsel des Hintergrunds der derzeitigen Anzeige erfolgen.

Vorzugsweise ist der Grenzbereich für die Motordrehzahl auf der Motordrehzahlanzeige konfigurierbar und kann je nach im Fahrzeug 1 verbautem Motor 23 eingestellt oder ausgewählt werden. Dies erfolgt hier und vorzugsweise mit dem Mobilgerät 8 bei der Konfiguration der Anzeige bzw. des Rundinstruments 2.

Zusätzlich oder alternativ zur Motordrehzahl kann die Steuerung 5 aus einem Signal 4 auch die Fahrzeuggeschwindigkeit und/oder den Ladedruck des Motors 23 als Fahrzeuginformation 6 generieren und auf dem Display 9 anzeigen.

Hier und vorzugsweise ist ferner vorgesehen, dass über die Fahrzeugschnittstelle 3 ein Signal 4 über den Betriebszustand des Scheinwerfers übertragen wird und das Display 9 ein Kontrollsymbol 25 über den Betriebszustand eines Scheinwerfers 26 digital anzeigt, etwa, ob dieser ausgeschaltet oder das Abblendlicht oder das Fernlicht eingeschaltet ist. Die Übertragung des Betriebszustands erfolgt hier und vorzugsweise in Form eines analogen Signals 4 über ein Kabel 27, über welches keine weiteren Fahrzeuginformationen 6 übertragen werden.

Zusätzlich oder alternativ ist vorgesehen, dass über die Fahrzeugschnittstelle 3 ein Signal 4 über den Betriebszustand eines Blinkers des Fahrzeugs 1 übertragen wird und dass das Display 9 ein Kontrollsymbol 28, 29 über den Betriebszustand des Blinker 30, 31 digital angezeigt. Dies erfolgt hier sowohl für den linken Blinker 30 als auch für den rechten Blinker 31. Das Signal 4 ist hier sowohl für den linken wie auch für den rechten Blinker 30, 31 jeweils ein analoges Signal 4. Für die Übertragung der Signale 4 des linken als auch des rechten Blinkers 30, 31 ist hier und vorzugsweise jeweils ein Kabel 32, 33 vorgesehen, über das jeweils keine weiteren Fahrzeuginformationen 6 übertragen werden. Wie an diesem Ausführungsbeispiel zu erkennen ist, kann die Fahrzeugschnittstelle 3 mehrere Anschlüsse bzw. Teilschnittstellen aufweisen.

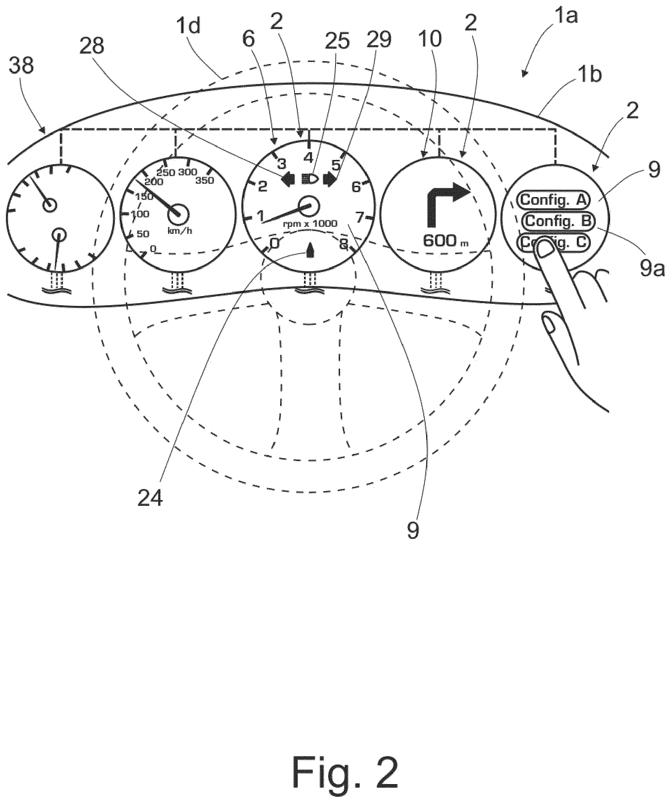

Wie bereits beschrieben, handelt es sich bei dem Display 9 des Rundinstruments 2 um ein digitales Display 9. Dieses ist hier als Runddisplay ausgebildet. Es erstreckt sich, wie in den Figuren 1 und 2 gezeigt, über mindestens 80 %, weiter vorzugsweise mindestens 90 %, hier und vorzugsweise über mindestens 95%, der Stirnfläche 2a des Rundinstruments 2. Es ist als Vollbildschirm im Gehäuse 2b des Rundinstruments 2 angeordnet. Die Anzeige erfolgt mittels eines Rasters aus Bildpunkten, die über mindestens 80 %, weiter vorzugsweise mindestens 90 %, hier und vorzugsweise über mindestens 95%, der Stirnfläche 2a des Rundinstruments 2 verteilt sind. Es kann insbesondere als Farbdisplay ausgebildet sein und/oder über eine Hintergrundbeleuchtung verfügen. Vorzugsweise handelt es sich um ein LCD-Display oder OLED-Display. Ferner kann das Display 9 über einen Touchscreen 9a zur Bedienung verfügen. Vorzugsweise erfolgt eine Eingabe jedoch mittels des Mobilgeräts 8 über die Kommunikationsschnittstelle 7. Es kann insbesondere auch kein Touchscreen vorgesehen sein und/oder einzig eine Konfiguration und/oder Bedienung über das Mobilgerät 8 möglich sein.

Wie Fig. 3 ferner entnommen werden kann, verfügt das Rundinstrumente 2 und vorzugsweise über ein, insbesondere topfförmiges, Gehäuse 2b. Hier ist an einer frontseitigen Stirnseite 2c des Gehäuses 2b das Display 9 und/oder auf der rückwärtigen Seite, hier Stirnseite 2d, die Fahrzeugschnittstelle 3 angeordnet. Der stirnseitige Durchmesser des Displays 9 beträgt vorzugsweise mindestens 70 mm, weiter vorzugsweise mindestens 100 mm, weiter vorzugsweise mindestens 125 mm.

Das Rundinstrument 2 weist, wie der Fig. 3 entnommen werden kann, an seinem Umfang 2e, insbesondere im Bereich B der frontseitigen Stirnseite 2c, einen Halteflansch 2f zum Halten des Rundinstruments 2 im Cockpit 1a, insbesondere in der Armatur 1b, des Fahrzeugs 1 auf. Es ist mit seiner Rückseite voran in eine Öffnung 34 des Cockpits 1a, hier in eine Öffnung 34 der Armatur 1b, einsetzbar. Es ist vorzugsweise in der Armatur 1b formschlüssig und/oder kraftschlüssig fixierbar. Das Rundinstrument 2 wird mittels einer Gummieinfassung 35 in dem Cockpit 1a bzw. in der Armatur 1b gehalten. Sie weist zum besseren Halten des Rundinstruments 2 und zum Dämpfen von Schwingungen ein Profil 35a auf. Dieses umfasst vorzugsweise mehrere Erhebungen 35b. Die Gummieinfassung 35 erstreckt sich vorzugsweise über den Umfang des Rundinstruments 2 herum. Im Ausführungsbeispiel ist diese zusätzlich zum Halteflansch 2f vorgesehen. Es kann jedoch auch nur ein Halteflansch 2f oder nur eine Gummieinfassung 35 vorgesehen sein.

Wie in den Figuren 1 und 2 anhand eines weiteren Rundinstruments 2 gezeigt wird, können auf dem Display 9 des Rundinstruments 2 Navigationsinformationen von dem Mobilgerät 8 digital angezeigt werden. Zusätzlich oder alternativ können Audioinformationen von mittels des Mobilgeräts 8 abgespielten Audiodaten auf dem Display 9 des Rundinstruments 2 digital angezeigt werden. Zudem können Anrufinformationen zu einem auf dem Mobilgerät 8 eingehenden oder ausgehenden Anruf auf dem Display 9 des Rundinstruments 2 digital angezeigt werden. Ferner können Wetterinformationen auf dem Display (9) des Rundinstruments (2) digital angezeigt werden. Hier handelt es sich bei den Navigationsinformationen und/oder den Audioinformationen und/oder den Anrufinformationen und/oder Wetterinformationen um Mobilinformation 10, welche über die Kommunikationsschnittstelle 7 vom Mobilgerät 8 zum Rundinstrument 2 übertragen werden.

Vorzugsweise nutzt das Rundinstrument 2 Satellitenpositionsbestimmungsdaten (GPS-Daten), welche als Mobilinformationen 10 vom Mobilgerät 8 über die Kommunikationsschnittstelle 7 bereitgestellt werden. Es kann jedoch auch vorgesehen sein, dass ein Sensor 36 zur Positionsbestimmung (GPS-Sensor) im Rundinstrument 2 vorgesehen ist und mittels dieses eine Geschwindigkeitsanzeige und/oder eine Navigationsanzeige bereitgestellt wird.

Sofern es sich bei dem Fahrzeug 1 um ein Hybridfahrzeug handelt, können auf dem Rundinstrument 2 auch Fahrzeuginformationen 6 zu einem hybriden Antriebsstrang angezeigt werden. Dann weist das Fahrzeug 1 nicht nur einen Motor 23, sondern zwei Motoren 23, nämlich einen Verbrennungsmotor 23a und einen Elektromotor 23b auf. Dies können zum Beispiel ein Batterieladestatus einer Batterie 37 und/oder eine Kraftverteilung zwischen dem Elektroantrieb 23b und dem Verbrennungsmotor 23a oder dergleichen sein.

Ferner ist in den Figuren 1 und 2 eine vorschlagsgemäße Rundinstrumentenanordnung 38 mit einem vorschlagsgemäßen Rundinstrument 2 gezeigt, welches hier und vorzugsweise wie zuvor beschrieben ausgebildet ist.

Die Rundinstrumentenanordnung 38 weist ferner ein Mobilgerät 8 zur Kommunikation mit dem Rundinstrument 2 über die Kommunikationsschnittstelle und/oder mindestens ein weiteres Rundinstrument 2 auf. Das mindestens eine weitere Rundinstrument 2 ist vorzugsweise ebenfalls wie das beschriebene Rundinstrument 2 ausgebildet. Im Ausführungsbeispiel weist die Rundinstrumentenanordnung 38 das Mobilgerät 8 und das weitere Rundinstrument 2 auf. Darüber hinaus können weitere Rundinstrumente 2, also insbesondere ein drittes, viertes und/oder fünftes Rundinstrument 2 vorgesehen sein. Das weitere Rundinstrument 2 weist bzw. die weiteren Rundinstrumente 2 weisen hier ebenfalls eine Fahrzeugschnittstelle 3 und/oder eine Kommunikationsschnittstelle 7 sowie ein frontseitiges Display 9 auf, wobei auf dem Display 9 eine über die Fahrzeugschnittstelle 3 und/oder die Kommunikationsschnittstelle 7 übertragene Information, insbesondere Fahrzeuginformation 6 und/oder Mobilinformation 10, anzeigbar ist.

Im Ausführungsbeispiel sind das erste Rundinstrument 2 und das weitere Rundinstrument 2 oder die weiteren Rundinstrumente 2 daten-technisch miteinander gekoppelt, hier über ihre Kommunikationsschnittstellen 7. Diese Kopplung ist im Ausführungsbeispiel kabellos, alternativ können sie jedoch auch über ein nicht gezeigtes Kabel miteinander daten-technisch gekoppelt sein. Die Rundinstrumente 2 sind über das Mobilgerät 8 konfigurierbar. Hier können die Rundinstrumente 2 durch das Mobilgerät 8 derart konfiguriert werden, dass die Konfiguration für die Rundinstrumente 2 von dem Mobilgerät 8 auf eines der Rundinstrumente 2 übertragen wird und dieses Rundinstrument 2 die Konfiguration für das weitere Rundinstrument 2 auf dieses weitere Rundinstrument 2 überträgt. Es ergibt sich eine Master-Slave-Konfiguration der Rundinstrumente 2. Die Kommunikation zwischen dem Mobilgerät 8 und den Rundinstrumenten 2 erfolgt über eines der Rundinstrumente 2 als Master und dieses eine Master-Rundinstrument übernimmt die Verteilung der jeweils benötigten Informationen auf das weitere Rundinstrument 2 als Slave bzw. die weiteren Rundinstrumente 2 als Slaves.

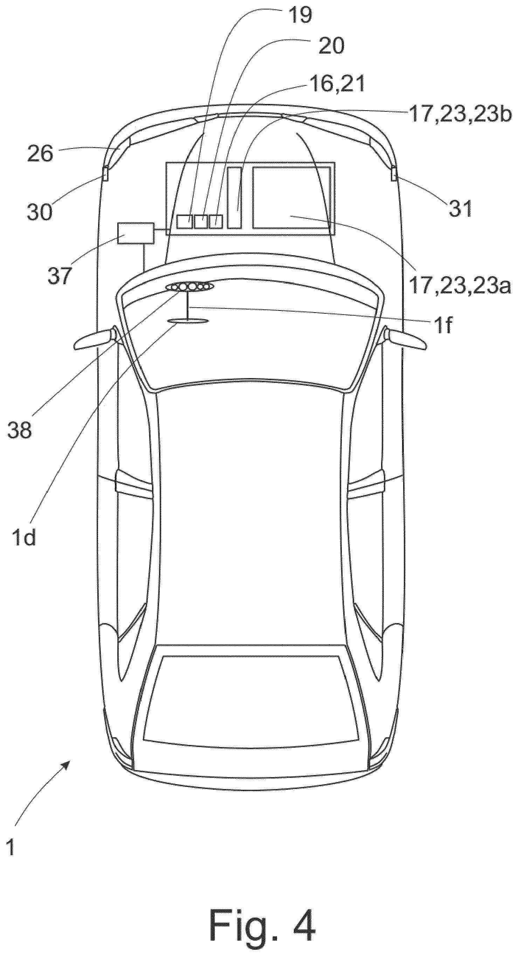

Wie eingangs bereits beschrieben ist das Rundinstrument 2 bzw. sind die Rundinstrumente 2 vorzugsweise in der Armatur 1b des Cockpits 1a eines Fahrzeugs 1 angeordnet, wie dies in der Fig. 4 gezeigt ist.

Das Cockpit 1a weist hier eine Lenksäule 1f mit einem an ihrem Ende angeordneten Lenkrad 1d auf. In Fahrtrichtung R des Fahrzeugs 1 vor dem Lenkrad 1d ist die Armatur 1b angeordnet. Diese weist mindestens ein Rundinstrument 2 der vorbeschriebenen Art und/oder eine Rundinstrumentenanordnung 38 der vorbeschriebenen Art auf. Hier ist eines der Rundinstrumente 2, insbesondere das erste Rundinstrument 2, in Fahrtrichtung R vor dem Lenkrad 1d angeordnet und durch eine Projektion des Lenkrads 1d entlang der Lenksäule 1f durch dieses verdeckt, wie anhand der gestrichelten Einblendung des Lenkrades 1d in den Figuren 1 und 2 gezeigt ist. Ferner ist ein Rundinstrument 2, insbesondere das weitere Rundinstrument 2, in Fahrtrichtung R vor dem Lenkrad 1d angeordnet und durch eine Projektion des Lenkrades 1d entlang der Lenksäule 1f überwiegend unverdeckt vom Lenkrad, vorzugsweise zu mindestens 80% unverdeckt vom Lenkrad. Dies ist ebenfalls den Figuren 1 und 2 gezeigt. Hierdurch ist dieses und insbesondere, wenn es über einen Touchscreen 9a verfügt, besonders einfach während der Fahrt zu bedienen, wie dies in der Fig. 2 gezeigt ist. Hier sind beispielsweise verschiedene Konfigurationen der Rundinstrumentenanordnung 38 über den Touchscreen 9a des weiteren Rundinstruments 2 wählbar.

## Patentansprüche

1. Rundinstrument für ein Fahrzeug (1) mit einer Fahrzeugschnittstelle (3) zur Übertragung von Signalen (4) zwischen dem Fahrzeug (1) und dem Rundinstrument (2),
mit einer elektrischen Steuerung (5) zur Verarbeitung mindestens eines über die Fahrzeugschnittstelle (3) vom Fahrzeug (1) zum Rundinstrument (2) übertragenen Signals (4) und zum Generieren mindestens einer Fahrzeuginformation (6) aus dem Signal (4),
mit einer Kommunikationsschnittstelle (7) zur Kommunikation des Rundinstruments (2) mit einem Mobilgerät (8), insbesondere einem Smartphone, und
mit einem frontseitigen digitalen Display (9) zur Anzeige der mindestens einen Fahrzeuginformation (6) und/oder einer über die Kommunikationsschnittstelle (7) vom Mobilgerät (8) empfangenen Mobilinformation (10).

2. Rundinstrument nach Anspruch 1, **dadurch gekennzeichnet, dass** das Rundinstrument (2), insbesondere die Anzeige auf dem Display (9) des Rundinstruments (2) und/oder die Steuerung (5) des Rundinstruments (2), mittels des Mobilgeräts (8) über die Kommunikationsschnittstelle (7) konfigurierbar ist.

3. Rundinstrument nach Anspruch 1 oder 2, **dadurch gekennzeichnet, dass** die Kommunikationsschnittstelle (7) eine drahtlose Schnittstelle ist, vorzugsweise, dass das Rundinstrument (2) einen Bluetooth-Chip aufweist und die Kommunikationsschnittstelle (7) eine Bluetooth-Schnittstelle ist.

4. Rundinstrument nach einem der vorhergehenden Ansprüche, **dadurch gekennzeichnet, dass** die Fahrzeugschnittstelle (3) eine analoge Teilschnittstelle (3a) zum Übertragen eines analogen Signals (4) und/oder eine digitale Teilschnittstelle (3b) zum Übertragen eines digitalen Signals (4) aufweist, vorzugsweise, dass eine weitere Teilschnittstelle (3c) zum Anschluss an ein Bussystem des Fahrzeugs (1) vorgesehen ist.

5. Rundinstrument nach einem der vorhergehenden Ansprüche, **dadurch gekennzeichnet, dass** das Rundinstrument (2) einen Analog-Digital-Wandler (18) aufweist, der ein über die Fahrzeugschnittstelle (3) übertragenes analoges Signal (4) in ein digitales Signal (4) wandelt, aus dem die Steuerung (5) die mindestens eine Fahrzeuginformation (6) generiert.

6. Rundinstrument nach einem der vorhergehenden Ansprüche, **dadurch gekennzeichnet, dass** die Steuerung (5) aus dem Signal (4) die Motordrehzahl und/oder die Fahrzeuggeschwindigkeit und/oder den Ladedruck des Motors (23) als Fahrzeuginformation (6) generiert und auf dem Display (9) anzeigt.

7. Rundinstrument nach einem der vorhergehenden Ansprüche, **dadurch gekennzeichnet, dass** die Fahrzeugschnittstelle (3) eine Teilschnittstelle (3a, 3b) aufweist, zu der vom Motor (23), insbesondere vom Motorsteuergerät (21) und/oder vom Zündverteiler (19) und/oder von einer Zündspule (20), aus Signale (4) über ein Kabel (22) übertragbar sind, vorzugsweise, dass keine weiteren Fahrzeuginformationen (6) generierenden Signale (4) über dasselbe Kabel (22) zu dieser Teilschnittstelle (3a, 3) übertragbar und auf dem Display (9) anzeigbar sind.

8. Rundinstrument nach einem der vorhergehenden Ansprüche, **dadurch gekennzeichnet, dass** über die Fahrzeugschnittstelle (3) ein Signal (4) über den Betriebszustand eines Scheinwerfers (26) und/oder eines Blinkers (30) des Fahrzeugs (1) übertragbar ist und das Display (9) ein digitales Kontrollsymbol über den Betriebszustand des Scheinwerfers (26) und/oder des Blinkers (30, 31) des Fahrzeugs (1) digital anzeigt.

9. Rundinstrument nach einem der vorhergehenden Ansprüche, **dadurch gekennzeichnet, dass** das Display (9) ein Runddisplay ist und/oder sich das Display (9) über mindestes 80%, weiter vorzugsweise mindestens 90%, weiter vorzugsweise mindestens 95%, der Stirnfläche (2a) des Rundinstruments (2) erstreckt.

10. Rundinstrument nach einem der vorhergehenden Ansprüche, **dadurch gekennzeichnet, dass** es ein topfförmiges Gehäuse (2b) aufweist, vorzugsweise, dass an einer frontseitigen Stirnseite (2c) des Gehäuses (2b) das Display (9) und/oder auf der rückwärtigen Stirnseite (2d) des Gehäuses (2b) die Fahrzeugschnittstelle (3) angeordnet ist.

11. Rundinstrument nach einem der vorhergehenden Ansprüche, **dadurch gekennzeichnet, dass** das Rundinstrument (2) an seinem Umfang, insbesondere im Bereich der Frontseite, einen Halteflansch (2f) zum Halten des Rundinstruments (1) im Cockpit (1a), insbesondere in der Armatur (1b), des Fahrzeugs (1) aufweist, vorzugsweise, dass das Rundinstrument (2) mit seiner Rückseite voran in eine Öffnung (34) im Cockpit (1a), insbesondere in der Armatur (1b), des Fahrzeugs (1) einsetzbar ist.

12. Rundinstrument nach einem der vorhergehenden Ansprüche, **dadurch gekennzeichnet, dass** Navigationsinformationen von dem Mobilgerät (8) auf dem Display (9) des Rundinstruments digital anzeigbar sind, und/oder, dass Audioinformationen von mittels dem Mobilgerät (8) abgespielter Audiodaten auf dem Display (9) des Rundinstruments (2) digital anzeigbar sind, und/oder, dass Anrufinformationen zu einem auf dem Mobilgerät (8) eingehenden oder ausgehenden Anruf auf dem Display (9) des Rundinstruments (2) digital anzeigbar sind und/oder dass Wetterinformationen auf dem Display (9) des Rundinstruments (2) digital anzeigbar sind.

13. Rundinstrumentenanordnung mit einem ersten Rundinstrument (2), welches gemäß einem der Ansprüche 1 bis 12 ausgebildet ist, und mit einem Mobilgerät (8) zur Kommunikation mit dem Rundinstrument (2) über die Kommunikationsschnittstelle (7) und/oder mit mindestens einem weiteren Rundinstrument (2), welches vorzugsweise gemäß einem der Ansprüche 1 bis 12 ausgebildet ist.

14. Rundinstrumentenanordnung nach Anspruch 13, **dadurch gekennzeichnet, dass** das erste Rundinstrument (2) und das mindestens eine weitere Rundinstrument (2) datentechnisch, insbesondere über ihre jeweilige Kommunikationsschnittstelle (7), miteinander gekoppelt sind, vorzugsweise, dass die Rundinstrumente (2) über das Mobilgerät (8) konfigurierbar sind, weiter vorzugsweise, dass die Rundinstrumente (2) durch das Mobilgerät (8) derart konfiguriert werden, dass die Konfiguration für beide Rundinstrumente (2) von dem Mobilgerät (8) auf eines der Rundinstrumente (2) übertragen wird und dieses die Konfiguration für das weitere Rundinstrument (2) auf dieses überträgt.

15. Fahrzeug mit einem Cockpit (1a), aufweisend eine Lenksäule (1f) mit einem am Ende der Lenksäule (1f) angeordneten Lenkrad (1d) und eine in Fahrtrichtung (R) des Fahrzeugs (1) vor dem Lenkrad (1d) angeordnete Armatur (1b) mit mindestens einem Rundinstrument (2) nach einem der Ansprüche 1 bis 12 und/oder mit einer Rundinstrumentenanordnung (38) nach einem der Ansprüche 13 oder 14, vorzugsweise, dass ein Rundinstrument (2), insbesondere das erste Rundinstrument (2), in Fahrtrichtung (R) vor dem Lenkrad (1d) angeordnet ist und durch eine Projektion des Lenkrads (1d) entlang der Lenksäule (1f) durch dieses verdeckt wird und/oder ein Rundinstrument (2), insbesondere das weitere Rundinstrument (2), in Fahrtrichtung (R) vor dem Lenkrad (1d) angeordnet ist und durch eine Projektion des Lenkrades (1d) in Fahrtrichtung (R) überwiegend unverdeckt vom Lenkrad (1d), vorzugsweise zu 80% unverdeckt vom Lenkrad (1d), ist.
